# EUROPEAN PATENT APPLICATION

(11) **EP 0 801 417 A2**
(43) Date of publication of application: **15.10.1997**
(21) Application number: 97302310.4
(22) Date of filing: 03.04.1997
(51) Int. Cl.: H01K 1/38, H01K 3/20, H01K 5/02

(54) **Double-ended type halogen lamp and method of making the same**

(30) Priority: 10.04.1996 JP 114248/96
(71) Applicant: Nishibori, Yumiko, Tokyo (JP); Nishibori, Mari, Tokyo (JP)
(72) Inventor: Nishibori, Yumiko, Tokyo (JP); Nishibori, Mari, Tokyo (JP)
(74) Representative: Hillier, Peter

(57) **Abstract**

A double-ended type halogen lamp including: a lamp envelop having seal portions at opposite ends thereof, and a filament extending between the seal portions, the seal portions each having a width smaller than the outside diameter of the lamp envelop, the width of one of the seal portions being equal to or different from that of the other.

## Description

### BACKGROUND OF THE INVENTION

### Field of the Invention

The present invention relates to a safe and inexpensive halogen lamp for various uses including general domestic uses, and to a method of making the same.

### Description of the Prior Art

Since the Edison's invention, various types of incandescent bulbs have been globally used such as eggplant-shaped incandescent bulbs for general lighting called "GLSs", reflector type incandescent bulbs deposited with aluminum, sealed-beam type incandescent bulbs, incandescent bulbs for use in chandeliers, and silica bulbs having silicon coating on the interior surface thereof.

In view of the future circumstances of energy, an energy-saving related law has passed and come into effect earlier in the U.S. than in any other country. In response to this law, a lighting related law has been enacted such that the brightness of incandescent bulbs for general lighting should be increased by 25 % (which, however, is at present applied to sealed-beam type and reflector type incandescent lamps). There is no doubt that such a tendency will become a worldwide trend sooner or later.

Halogen lamps are attracting increasing attention as satisfying such a requirement, because they have a high luminous efficiency and exhibit brightness 30 to 40 % higher than the typical GLSs at an equal power consumption, and further have a life time about twice as long as that of the GLSs.

However, the halogen lamp is required to generate a halogen cycle within the bulb thereof and, for this purpose, the temperature within the bulb must be at least 180 °C when a bromide is used as the halogen, or at least 150 °C when a chloride is used.

Further, to prolong the life time of the halogen lamp, the evaporation of tungsten forming a filament is required to be retarded generally by pressurizing the inside of the bulb (typically to 3-7 atm.).

Since the pressure in the halogen lamp is high as described above, any residual strain in the lamp envelop may cause an explosion of the lamp envelop. Particularly, when a tip tube used for exhausting the lamp envelop is cut for sealing and remains on the lamp envelop in the form of a protrusion, a strain is generated at or adjacent the protrusion. In addition, a further strain due to a non-uniform material distribution of the lamp envelop is combined with the former. Consequently, repeated on/off operations of the lamp sometimes cause the lamp envelop to crack. When the pressure within the lamp envelop abruptly increases due to arc discharge upon braking of the filament (which is not so frequent as is with a single-ended type halogen lamp), the lamp envelop often explodes instantaneously from the cracked portion. For this reason, it is impossible to sufficiently pressurize the inside of the lamp envelop to prolong the life. In the case of a smaller sized double-ended halogen lamp, sealing of the lamp envelop can not be carried out with the pressure therewithin kept sufficiently high in liquid nitrogen. This is because the gas within the lamp envelop can not be sufficiently cooled due to the thermal power of a burner applied to the small lamp envelop.

Further, the existence of such a protrusion causes nonuniformity of temperature distribution around the protrusion, which leads to increased strain in the lamp envelop, hence, to increased possibility of the explosion of the lamp envelop.

Additionally, such a protrusion formed by cutting the tip tube affects the distribution of light when the lamp is lit and further causes the scattering of light when the lamp is used in an optical system.

There exists another problem that since the lamp envelop has been constructed to have a constant diameter throughout the lamp envelop, the longitudinal positioning and the centering of a mount relative to the lamp envelop in inserting the mount into the lamp envelop were difficult to perform and hard to automate, which leads to inaccuracy in the sealing position or the centering position of the filament relative to the lamp envelop.

It is, therefore, an object of the present invention to provide a halogen lamp which is unlikely to explode by eliminating a tip tube and capable of fully exhibiting the advantages of a halogen lamp by adopting a tip tube free construction.

It is another object of the present invention to provide a halogen lamp which allows easy and accurate positioning and centering of the mount relative to the lamp envelop.

By achieving these objects, any conventional incandescent bulb can be easily and safely used as a double-ended type halogen lamp having a pressure resistance without changing its configuration. Further, since this halogen lamp can be easily and compactly housed in an outer bulb such as of the reflector type, sealed beam type, or eggplant-shaped type, it is possible to realize a double-bulb type lamp having a high luminous efficiency.

### SUMMARY OF THE INVENTION

In accordance with a first aspect of the present invention, there is provided a double-ended type halogen lamp comprising a lamp envelop having seal portions at opposite ends thereof, and a filament extending between the seal portions, the seal portions each having a width smaller than the outside diameter of the lamp envelop, the width of one of the seal portions being equal to or different from that of the other.

In accordance with a second aspect of the present invention, there is provided a double-ended type halogen lamp comprising a lamp envelop having seal portions at opposite ends thereof, and a filament extending between the seal portions, one of the seal portions having a width smaller than the outside diameter of the lamp envelop, the other having a width substantially equal to or larger than the outside diameter of the lamp envelop.

In these constructions, a mount formed by connecting a sealing foil to each end of the filament by means of, for example, welding or caulking is used in a lamp envelop formed of quarts glass, or alternatively a mount formed by connecting a lead pin to each end of the filament either directly or indirectly through a sleeve or a lead wire without using a sealing foil is used in a lamp envelop formed of hard glass such as boron silicate glass or aluminosilicate glass.

In accordance with a third aspect of the present invention, there is provided a double-ended type halogen lamp comprising a lamp envelop having seal portions at opposite ends thereof, sealing foils respectively embedded in the seal portions, and a filament disposed in the lamp envelop and having opposite ends connected to the respective sealing foils, one of the sealing foils having a width larger than any one of the width of the other sealing foil and the outside diameter of the filament.

In accordance with a fourth aspect of the present invention, there is provided a method of making a double-ended type halogen lamp comprising the steps of: providing a lamp envelop having a narrow portion of a smaller inside width at at least one end thereof: forming a mount having a first end intended to pass through the narrow portion and a second end not intended to pass through the narrow portion, the mount including: a filament capable of passing through the narrow portion, one end of the filament on the side of the second end of the mount being connected to a sealing foil having a larger width than the inside width of the narrow portion, the other end of the filament being connected to another sealing foil having a smaller width than the inside width of the narrow portion; inserting the mount into the lamp envelop from the first end thereof until the sealing foil having a larger width engages the narrow portion of the lamp envelop: and sealing the opposite ends of the lamp envelop.

With this method, the sealing of the lamp envelop can be achieved without providing the conventionally required tip tube and, hence, the lamp envelop has reduced strain, resulting in a lamp with less possibility of the explosion.

Further, since the length of the filament and the distance between the sealing foils are substantially constant in any lamps of the same type, the position of the smaller width sealing foil can be immediately and directly determined when the filament of the mount is inserted into the lamp envelop until the larger width sealing foil engages the narrow portion of the lamp envelop. Consequently, the automation of sealing can be considerably facilitated.

Thus, a compact, light and long-life halogen lamp fulfilling the objects of the present invention can be implemented. Such a halogen lamp is highly adaptable for mass production.

In accordance with a fifth aspect of the present invention, there is provided a method of making a double-ended type halogen lamp comprising the steps of: providing a lamp envelop having a narrow portion of a smaller inside width at at least one end thereof: forming a mount having a first end intended to pass through the narrow portion and a second end not intended to pass through the narrow portion, the mount including: a filament capable of passing through the narrow position, a first sealing foil having a width smaller than the inside width of the narrow portion and connected to one end of the filament on the side of the first end of the mount, a second sealing foil connected to the other end of the filament on the side of the second end of the mount, and an engagement member having a width larger than the inside width of the narrow portion and attached to one of the second sealing foil, the filament on the side of the second end of the mount and an outer lead pin connected to the second sealing foil on the side opposite the filament; inserting the mount into the lamp envelop from the first end thereof until the engagement member engages the narrow portion; and sealing the opposite ends of the lamp envelop.

This method also enables the sealing operations to be automated thereby providing a compact, light and long-life lamp adapted for mass production. Further, the conventionally required tip tube is dispensed with, so that the resulting lamp is less likely to explode.

In this case, both of the sealing foils may have a width smaller than the inside width of the narrow portion, or alternatively, only the second sealing foil may have a larger width than the inside width of the narrow portion of the lamp.

When the engagement member having a larger width than the inside width of the narrow portion is attached to the filament, it is attached to a lead portion of the filament or to an inner lead pin if used.

In accordance with a sixth aspect of the present invention, there is provided a method of making a double-ended type halogen lamp comprising the steps of: providing a lamp envelop having a narrow portion of a smaller inside width at at least one end thereof; forming a mount having a first end intended to pass through the narrow portion and a second end not intended to pass through the narrow pbrtion, the mount including: a filament capable of passing through the narrow portion, lead pins respectively connected to opposite ends of the filament, and an engagement member having a larger width than the inside width of the narrow portion and attached to one of the lead pins or to the filament; inserting the mount into the lamp envelop from the first end thereof until the engagement member engages the narrow portion; and sealing the opposite ends of the lamp envelop.

This method is suitable for making a lamp having a hard glass type lamp envelope. Also in this case, explosion of the lamp envelop can be effectively avoided by the elimination of the tip tube and, further automatic sealing of the lamp envelop becomes possible. Thus, a compact and long-life halogen lamp can be provided.

In the method of making a double-ended type halogen lamp according to the fourth to sixth aspects of the present invention, it is desired that the lamp envelop has a positioning portion with a small diameter at the end opposite the narrow portion, and that the first end of the mount be inserted into the positioning portion.

In this method, since the first end of the mount is inserted into and held in the positioning portion, the filament is kept centered in the lamp envelop even when the sealing of the lamp envelop is carried out.

Recently, there is a tendency of applying a coating comprising, for example, forty-seven layers or more onto the lamp envelop to have an increased light flux. A double-ended type halogen lamp, if applied with such a coating, provides a brightness 1.5 times that of a lamp without coating. Aligning the filament substantially with the central axis of the lamp envelop allows uniform light emission from the whole circumference of the lamp envelop and enhances the luminous efficiency.

It should be noted that if the leading end of the sealing foil adjacent the first end of the mount is tapered, the insertion of the sealing foil into the small diameter portion can be further facilitated.

These and other objects, features and attendant advantages will become readily apparent from the reading of the following detailed description of the invention in conjunction with the attached drawings.

### BRIEF DESCRIPTION OF THE DRAWINGS

Fig. 1 is a sectional view illustrating a first embodiment of the present invention in a state where a mount is inserted into and engaged with a lamp envelop;
Fig. 2 is a sectional view illustrating a second embodiment of the present invention in a state where a mount is inserted into and engaged with a lamp envelop;
Fig. 3 is a sectional view illustrating a third embodiment of the present invention in a state where a mount is inserted into and engaged with a lamp envelop;
Fig. 4 is a fragmentary sectional view illustrating a fourth embodiment of the present invention in a state where a mount is inserted into and engaged with a lamp envelop;
Fig. 5 is a fragmentary sectional view illustrating a fifth embodiment of the present invention in a state where a mount is inserted into and engaged with a lamp envelop;
Fig. 6 is a fragmentary sectional view illustrating a sixth embodiment of the present invention in a state where a mount is inserted into and engaged with a lamp envelop;
Fig. 7 is a fragmentary sectional view illustrating a seventh embodiment of the present invention in a state where a mount is inserted into and engaged with a lamp envelop;
Fig. 8 is a fragmentary sectional view illustrating a eighth embodiment of the present invention in a state where a mount is inserted into and engaged with a lamp envelop;
Fig. 9 is a fragmentary sectional view illustrating a ninth embodiment of the present invention in a state where a mount is inserted into and engaged with a lamp envelop;
Fig. 10 is a fragmentary sectional view illustrating a tenth embodiment of the present invention in a state where a mount is inserted into and engaged with a lamp envelop;
Fig. 11 is a fragmentary sectional view illustrating a eleventh embodiment of the present invention in a state where a mount is inserted into and engaged with a lamp envelop;
Fig. 12 is a sectional view illustrating a state where a lamp envelop in which a mount is inserted to engage the lamp envelop is heated at the lower end thereof in accordance with the present invention;
Fig. 13 is a sectional view illustrating a state where a lamp envelop in which a mount is inserted to engage the lamp envelop is pinch-sealed at the lower end thereof in accordance with the present invention;

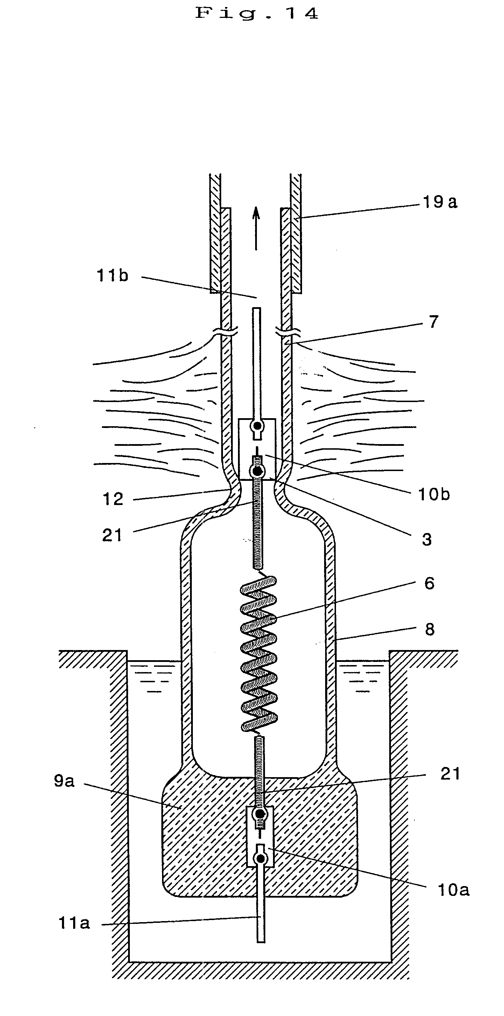

Fig. 14 is a sectional view illustrating a state where a lamp envelop in which a mount is inserted to engage the lamp envelop is heated at the upper end thereof in accordance with the present invention;
Fig. 15 is a sectional view illustrating a first example of a quartz glass type halogen lamp in accordance with the present invention;
Fig. 16 is a sectional view illustrating a second example of a quartz glass type halogen lamp in accordance with the present invention;
Fig. 17 is a sectional view illustrating a first example of a hard glass type halogen lamp in accordance with the present invention;
Fig. 18 is a sectional view illustrating a second example of a quartz glass type halogen lamp in accordance with the present invention;
Fig. 19 is a partially cutaway perspective view of an eggplant-shaped double-bulb type lamp in accordance with the present invention; and

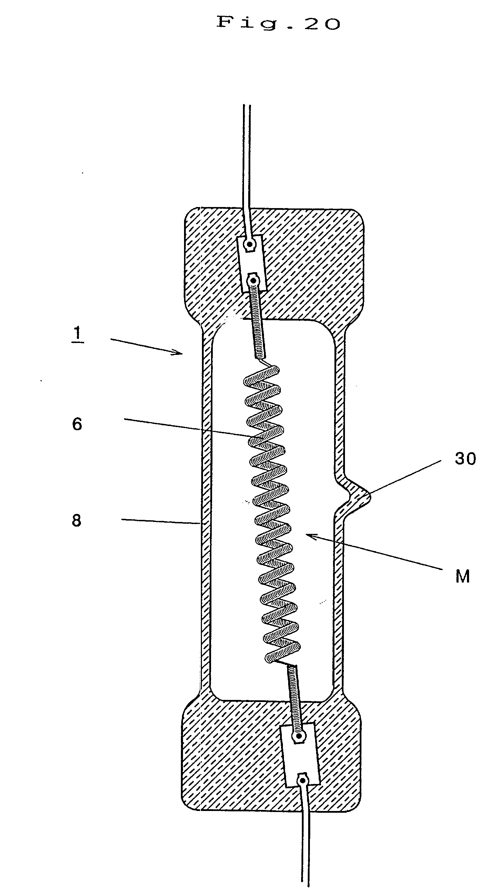

Fig. 20 is a sectional view of a conventional quartz glass type halogen lamp.

### DETAILED DESCRIPTION OF THE PREFERRED EMBODIMENTS

The present invention will now be described in detail with reference to the accompanying drawings.

A halogen lamp 1 in accordance with the present invention is of a double-ended type having seal portions 9a and 9b at opposite ends of a lamp envelop 8. The lamp envelop 8 is formed of quartz glass or hard glass, and may assume slightly different structures depending on the material to be used as will be described later. In any case, a filament 6 stretchedly extends in the lamp envelop 8. The filament 6 is of the double coil type made of tungsten.

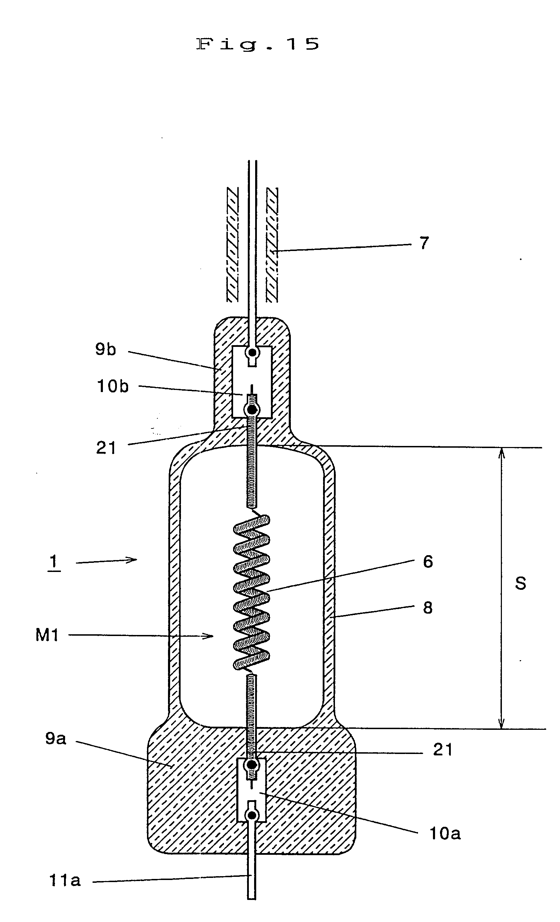

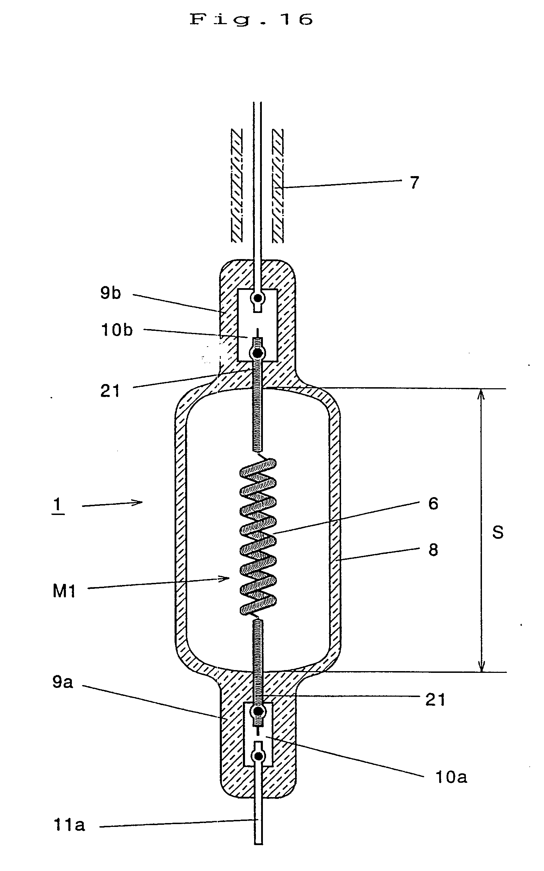

Where the lamp envelop 8 is formed of quartz glass, sealing metal foils 10a and 10b are embedded in the seal portions 9a and 9b, respectively. Each of the sealing foils 10a and 10b has an inner end connected to one end of the filament 6 either directly or through an inner lead pin 21, and an outer end connected to an outer lead pin 11a or 11b. In the embodiments illustrated in the drawings, the inner lead pins 21 are used (see Figs. 15 and 16).

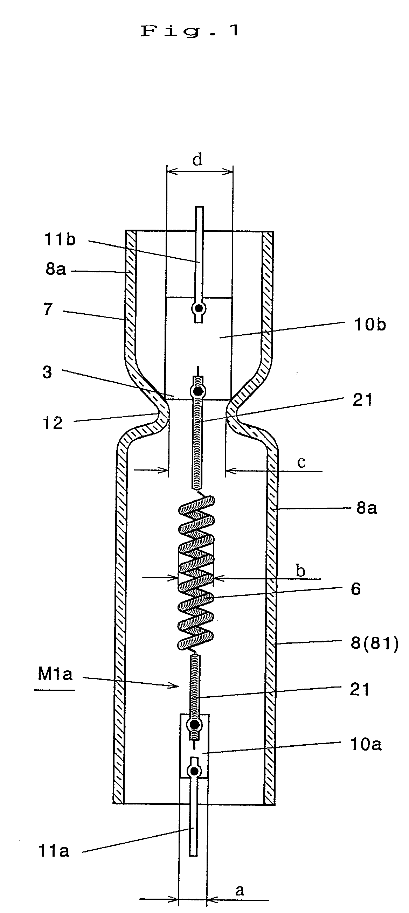

Referring to Fig. 1, a first form of lamp envelop 8 in accordance with the present invention has a narrow portion 12 for engagement formed by reducing the diameter of a portion of a glass tube 8a at a portion. Specifically, the narrow portion 12 is formed by forcing the entire circumference or side walls of the portion of the glass tube 8a inwardly (typically symmetrically).

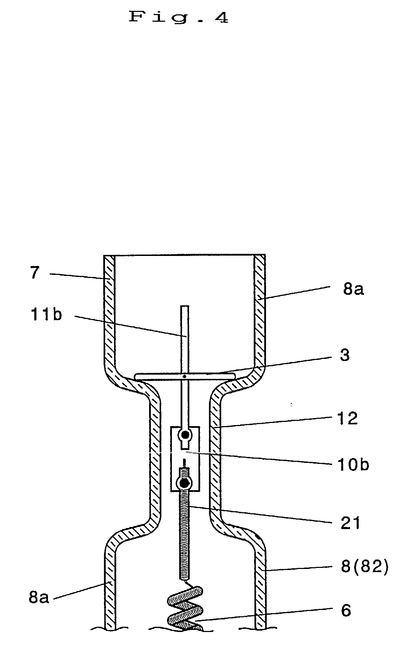

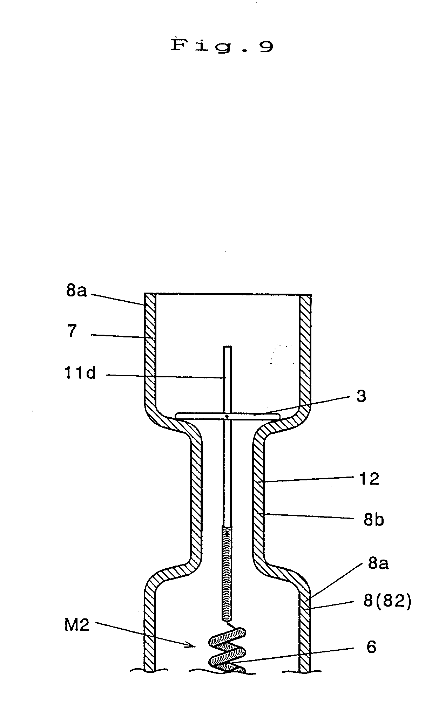

Figs. 4 and 9 show a second form of lamp envelop 8 in accordance with the present invention wherein the narrow portion 12 for engagement is formed into a thin tube. The narrow portion 8b may be formed by heating and then drawing a glass tube 8a of a larger diameter to have a reduced diameter or by joining a thin glass tube 8b to the thick glass tube 8a.

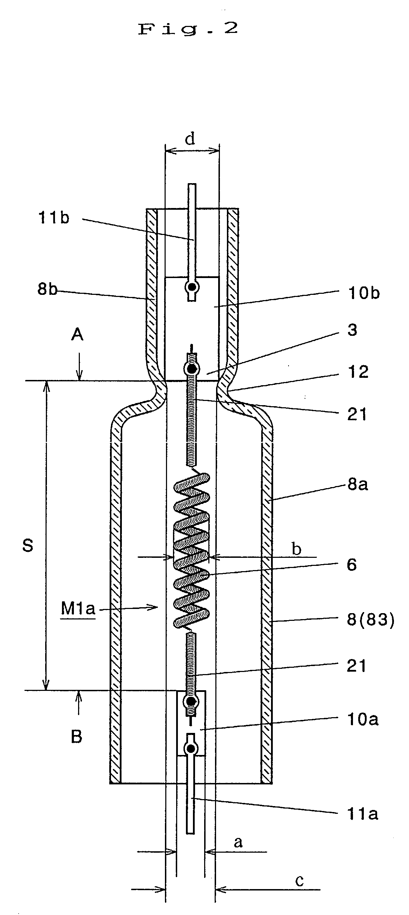

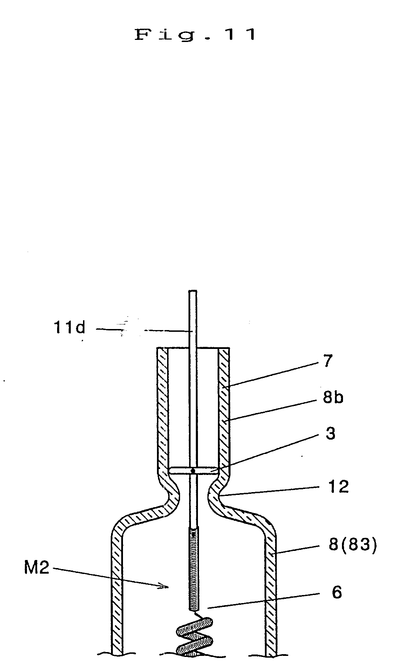

Shown in Figs. 2, 7, 8, and 11 is a third form of lamp envelop 8 in accordance with the present invention in which thin glass tube 8b is integrally joined with one end of thick glass tube 8a, and the thin glass tube 8b is inwardly dented at a portion adjacent its base portion to form the narrow portion 12. The narrow portion 12 may comprise such dented portion extending along the entire circumference or side walls of the glass tube 8b (typically symmetrically). For ease of manufacture, the dented portion is formed to extend along the entire circumference of the narrow portion 12.

An exemplary method of forming the narrow portion 12 is as follows: A tungsten rod is inserted into a portion to be formed into the narrow portion 12 of a glass tube and that portion is heated to be softened in a non-oxidizable atmosphere. Then, the heated portion is nipped from opposite sides, and thus the narrow portion is formed having a constant width determined based on the diameter of the tungsten rod.

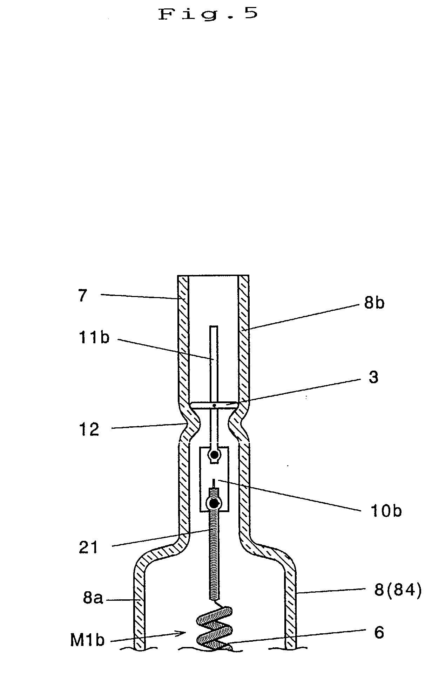

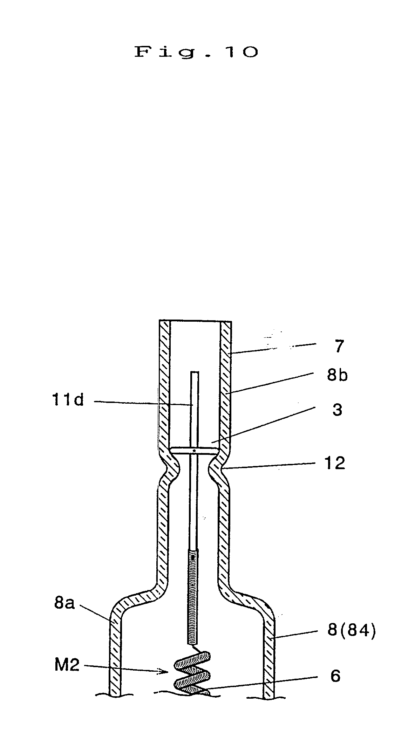

A fourth form of lamp envelop 8 in accordance with the present invention is shown in Figs. 5, 6, and 10, wherein the narrow portion 12 is formed in a longitudinally intermediate portion of a thin glass tube 8b. Also in this case, the narrow portion 12 for engagement may extend along the entire circumference or side walls of the glass tube (typically symmetrically).

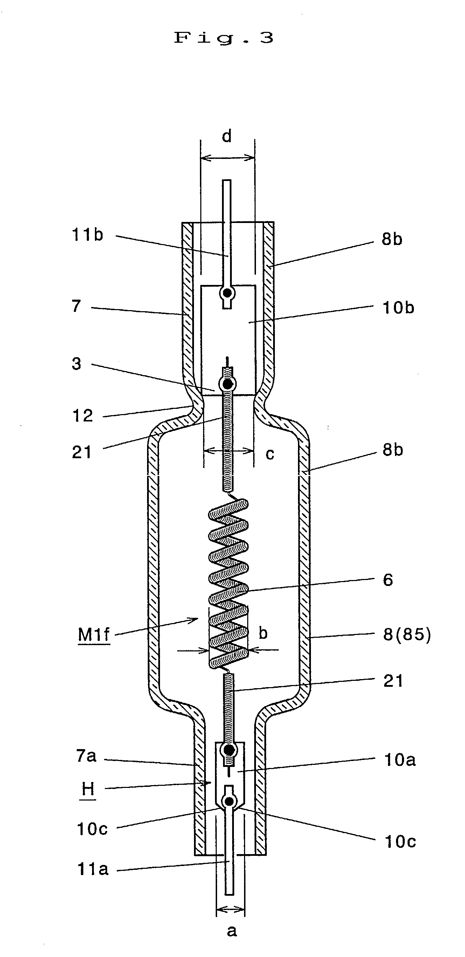

Shown in Fig. 3 is a fifth form of lamp envelop 8 in accordance with the present invention, wherein the lamp envelop 8 has a positioning portion 7a of a small diameter at opposite end thereof from the narrow portion 12. Although the example shown in Fig. 3 has the narrow portion 12 for engagement formed at the base portion of thin glass tube 8b, the present invention is not limited to such a configuration. That is, the lamp envelop 8 may comprise on the engaging side thereof a thick glass tube 8a as shown in Fig. 1, two thick glass tubes 8a and a thin glass tube 8b disposed therebetween as shown in Fig. 4, or a thin glass tube 8b protruding from a thick glass tube 8a and having the narrow portion 12 for engagement formed in a longitudinally intermediate portion thereof as shown in Fig. 5. Alternatively, it is possible that a central portion of a thin glass tube 8b having a relatively thick peripheral wall is heated and expanded into the configuration shown in Fig. 3.

In any of the cases described above, a portion of the thick or thin glass tube to which a protective gas tube 19 or a gas supply/discharge tube 19a is connected serves as a connecting tube portion 7.

A first form of a mount M1 for a quartz glass lamp in accordance with the present invention, which is indicated at M1a in Figs. 1 and 2, has sealing foils 10a and 10b welded to opposite ends of the filament 6, and outer lead pins 11a and 11b respectively welded to outer ends of the sealing foils. Instead of the outer lead pins 11a and 11b, the sealing foils 10a and 10b may be drawn out of the seal portions 9a and 9b. The filament 6 and one sealing foil 10a are made narrow so as to be capable of passing through the narrow portion 12, while the other sealing foil 10b is made relatively wide so as not to pass through the narrow portion 12. In this construction, a shoulder portion of the wider sealing foil 10b on the filament side serves as an engagement member 3.

A second form of mount M1 for a quartz glass lamp, which is indicated at M1b in Figs. 4 and 5, has a configuration wherein both the sealing foils 10a and 10b as well as the filament 6 are made narrow so as to be capable of passing through the narrow portion 12 for engagement, and an engagement member 3 is welded perpendicularly to the outer lead pin 11b.

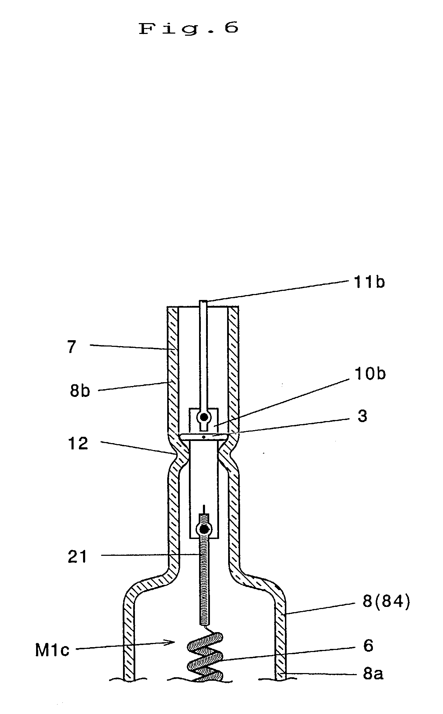

A third form of mount M1 for a quartz glass lamp is indicated at M1c in Fig. 6. The difference between this construction and that illustrated in Fig. 5 lies in the position of the engagement member 3. In this form, the engagement member 3 is welded perpendicularly to the sealing foil 10b, preferably, at a portion adjacent an end of the sealing foil 10b.

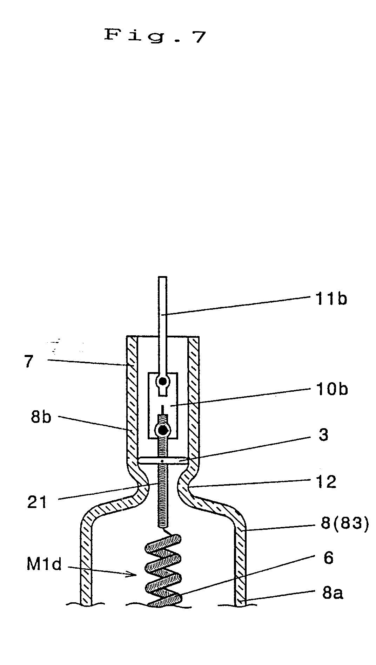

A fourth form, indicated at M1d in Fig. 7, of mount M1 for a quartz glass lamp is also different in the position of the engagement member 3 from that illustrated in Fig. 5. That is, the engagement member 3 is welded perpendicularly to the inner lead pin 21 (or to the filament 6, not shown).

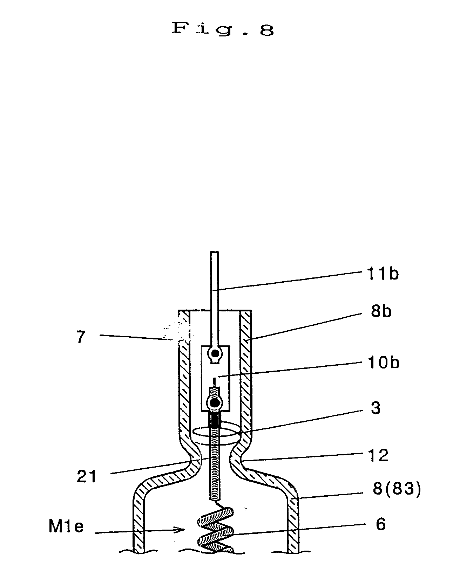

Whereas the engagement member 3 shown in Fig. 7 is rod-shaped, a fifth form, indicated at M1e in Fig. 8, of mount M1 for a quartz glass lamp comprises a ring-shaped engagement member 3 which can be attached to the outer lead pin 11b or the inner lead pin 21 or a filament lead 6a (not shown).

Referring to Figs. 9 to 11, mount M2 for a hard glass envelop is shown wherein lead pins 11c, 11d are directly welded to opposite ends of filament 6, and further engagement member 3 is vertically welded to one lead pin 11d or to filament lead 6a.

To be described next is a method of making a double-ended type halogen lamp in accordance with the present invention. In the case of a quartz glass lamp, lamp envelop 8 with a connecting tube portion 7 at one end thereof is provided. The next step is forming a mount M1 in which one sealing foil 10b has a width larger than any of the width of the other sealing foil 10a and the diameter of filament 6 and the sealing foil 10a and the filament 6 can pass through the narrow portion 12 of the lamp envelop 8, or a mount M1 provided with an engagement member 3 in which the sealing foils 10a, 10b and the filament 6 are narrow or thin enough to be capable of passing through the narrow portion 12, or a mount M1 provided with engagement member 3 in which one sealing foil 10a and filament 6 are narrow or thin enough to be capable of passing through the narrow portion 12 of the lamp envelop 8 and the other sealing foil 10b has a width larger than the engagement member 3. Then the mount M1 is inserted into the lamp envelop 8 until the shoulder of the sealing foil 10b or the engagement member 3 engages the narrow portion 12 thereby suspending the mount M1 in the lamp envelop 8.

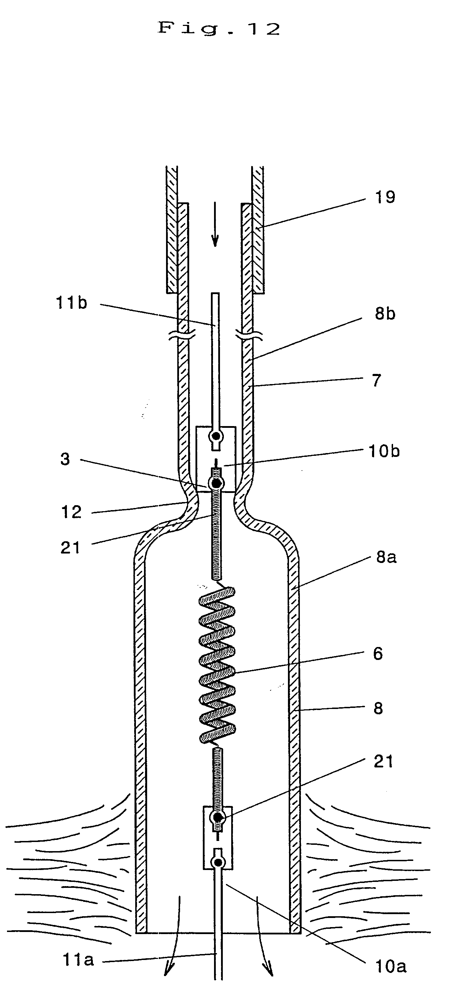

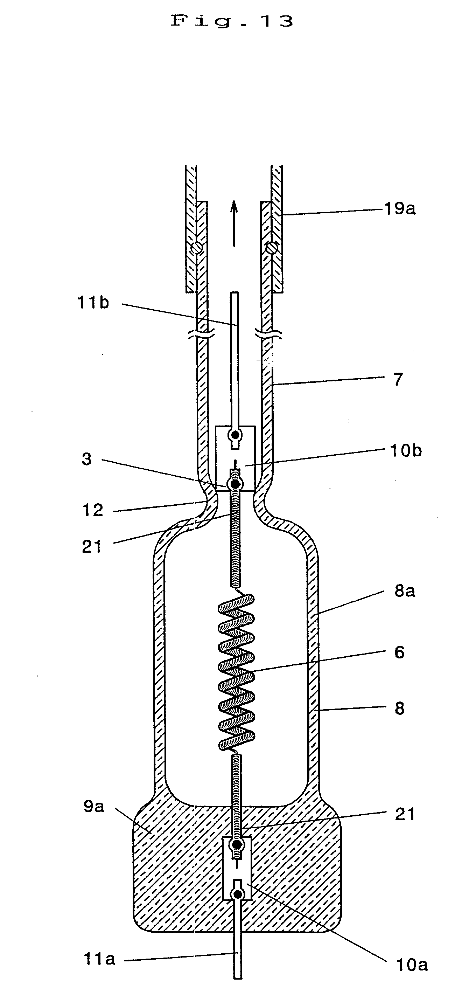

In turn, a protective gas tube 19 is connected to the connecting tube portion 7 and an inert gas is supplied through the protective gas tube 19 into the lamp envelop 8 while heating an end of the lamp envelop 8 as shown in Fig. 12 for sufficiently softening and sealing the end, thus providing the configuration shown in Fig. 13. In the drawing, the seal portion is designated by reference character 9a.

Next, a gas supply/exhaust tube 19a connected to a vacuum source is connected to the connecting tube portion 7 in the place of the protective gas tube 19 for exhausting the gas from the lamp envelop 8. Then, while cooling the lamp envelop 8 and the seal portion 9a, a required gas containing a halogen gas is supplied into the lamp envelop 8. Subsequently, a portion of the connecting tube portion 7 coinciding with the sealing foil 10b is heated so as to be sufficiently softened. The softened portion is then sealed and, simultaneously, unnecessary portions are cut away, thus resulting in the configuration shown in Fig. 15.

The quartz glass type halogen lamp formed by the method described above has a configuration wherein a conventionally required tip tube 30 is eliminated and one seal portion 9b at one end of the lamp envelop 8 has a width smaller than the outside diameter of the lamp envelop 8, while the other seal portion 9a has a width larger than the outside diameter of the lamp envelop 8.

A method of forming a hard glass type halogen lamp is as follows. A lamp envelop 8 with a connecting tube portion 7 at one end thereof is provided, and mount M2 is inserted into the lamp envelop 8 until engagement member 3 engages the narrow portion 12 of the lamp envelop 8.

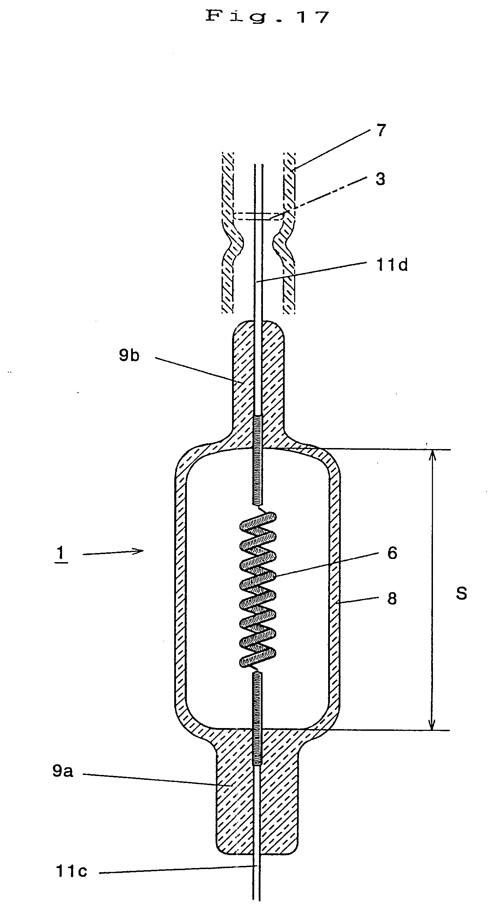

In turn, a protective gas tube 19 is connected to the connecting tube portion 7 and an inert gas is supplied through the tube 19 into the lamp envelop 8 while heating an end of the lamp envelop 8 as shown in Fig. 12 for sufficiently shrinking the end to achieve fusion-sealing or pinch-sealing of the end. The fusion-sealed or pinch-sealed portion is designated by the reference character 9a in Fig. 17.

Next, the connecting tube portion 7 is connected through a gas supply/exhaust tube 19a to a vacuum source (not shown) for exhausting the gas from the lamp envelop 8. Then, while cooling the lamp envelop 8 and the seal portion 9a, a required gas containing a halogen gas is supplied into the lamp envelop 8. Subsequently the base portion of the connecting tube portion 7 is heated to shrink, and subjected to fusion-sealing or pinch-sealing of the end and simultaneously unnecessary portions are cut away, thus providing the configuration shown in Fig. 17.

The hard glass type halogen lamp formed by the method described above has a configuration in which a conventionally required tip tube 30 is eliminated and one seal portion 9b formed at one end of the lamp envelop 8 has a width smaller than the outside diameter of the lamp envelop 8 while the other seal portion 9a has a width larger than the outside diameter of the lamp envelop 8. (See Fig. 17)

Where the lamp envelop 8 has at one end thereof the narrow portion 12 having a smaller inside width and at the other end thereof a positioning portion 7a having a small diameter as shown in Fig. 3, the insertion end H of the mount on the non-engaging side or the sealing foil 10a side is inserted and retained in the positioning portion 7a whereby the mount is supported at both ends thereof. Accordingly, the filament 6 will not deviate from the central axis of the lamp envelop 8 even when the sealing is carried out.

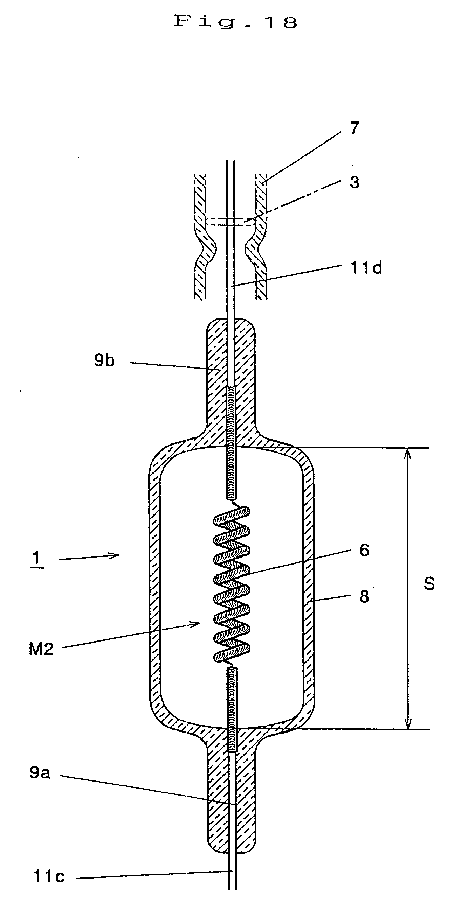

In this case, the resulting quartz glass type halogen lamp has a configuration shown in Fig. 16, while the resulting hard glass type halogen lamp has a configuration shown in Fig. 18, in both of which configurations the seal portions 9a and 9b formed at the opposite ends of the lamp envelop 8 are smaller in width than the outside diameter of the lamp envelop 8.

Any form of the double-ended halogen lamp of the present invention does not use a support (not shown) and hence is characterized by having a smaller size than that of a conventional lamp in which the distance between seal portions is at least about 45 mm.

The length between the base ends of the seal portions 9a and 9b is set with the range depending on the power consumption as follows. That is, in a X, Y coordinate system wherein the X axis (abscissa) represents power consumption (watt) and the Y axis (ordinate) represents the length (L) between seal portions 9a and 9b of the lamp envelop 8, the length (L) is set within a rectangular range defined by four points, i.e., 7 mm at 30 watt (the minimum length L at 30 watt), 24 mm at 30 watt (the maximum length L at 30 watt), 8 mm at 100 watt (the minimum length L at 100 watt), and 25 mm at 100 watt (the maximum length L at 100 watt).

The thick glass tube 8a used to form the lamp envelop 8 typically has an inside diameter in the range of from 4 to 10 mm and a peripheral wall thickness in the range of from 0.8 to 1.5 mm. Suitable gases or materials are filled in the lamp envelop 8 depending on the specification or the application of the lamp.

The temperature of the lamp envelop 8 of halogen lamp 1 in lighting is set to within the range from 250 °C to 800 °C. Since the halogen lamp of the present invention has a much smaller length than that of a conventional halogen lamp, the difference between the highest temperature point and the lowest temperature point of the lamp envelop 8 is not greater than 200 °C. Accordingly, the temperature difference is small even when the lamp is used in a vertical orientation, so that darkening of the lamp which leads to a shortened operational life of the lamp rarely occurs.

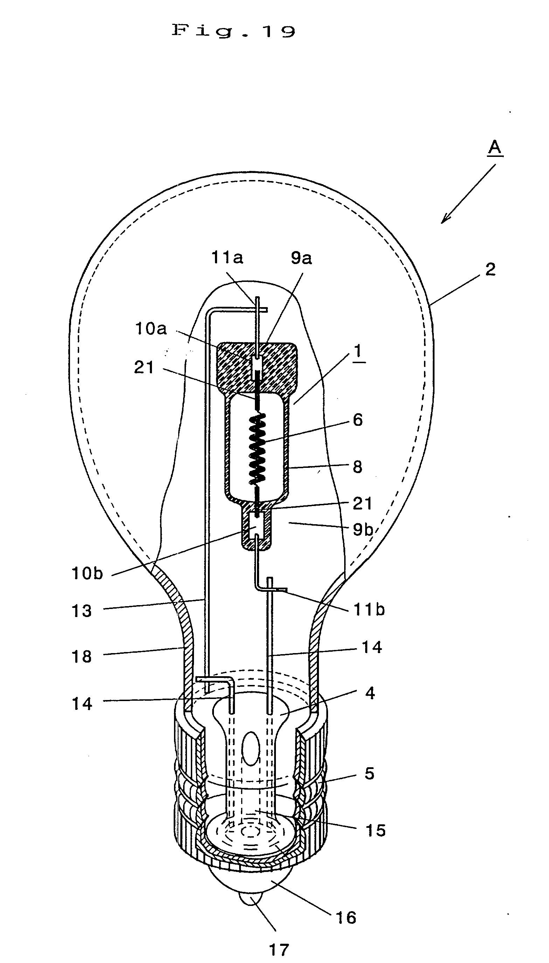

To be described next is the case where the halogen lamp 1 is used in an outer bulb 2. Fig. 19 shows an outer bulb 2 of an eggplant-shaped type having a neck 18 extending upward from the lower end thereof to which a lamp base 5 of the same size as that of a typical eggplant-shaped incandescent lamp is fixedly attached with an adhesive.

A stem 4 is disposed in an opening of the neck 18 and stem-side lead pins 14 are embedded in the stem 4 such that one end of each stem-side lead pin 14 projects from top of the stem 4. Adjacent the base portion of the stem 4 is provided an exhaust tube 15 which has been used to provide communication between the inside and outside of the bulb. The exhaust tube 15 is sealingly closed at an end thereof.

In the present invention, the outer lead pins 11a and 11b of the halogen lamp 1 (or lead pins 11c and 11d in the case of the hard glass type halogen lamp) are fixedly connected to the respective stem-side lead pins 14 projecting from the stem 4 disposed in the neck 18. In this embodiment, one outer lead pins 11a is connected to one of the stem-side lead pins 14 through an intermediate lead pin 13. Connection between lead pins are generally achieved by welding. Instead of using the intermediate lead pin 13, the outer lead pin 11a may be extended and bent so as to be directly connected to the corresponding stem-side lead pin 14.

The lamp base 5 is bonded to the periphery of the end portion of the neck 18. A central contact 17 disposed centrally of the lamp base through an insulator 16 is connected to one of the stem-side lead pins 14 and the other of the stem-side lead pins 14 is connected to the lamp base 5, each connection being made through a lead-in wire (typically, Dumet wire) capable of ensuring hermetic seal in cooperation with the glass material forming the stem 4. With this construction, the halogen lamp can be connected directly to any typical socket for the conventional eggplant-shaped incandescent bulb.

The inside of the outer bulb 2 is preferably kept in a reduced pressure by means of the exhaust pipe 15 so that sound and shock generated by a possible explosion of the inner bulb, or the halogen lamp 1 can be absorbed, thereby alleviating damage to the outer bulb 2.

It is possible to use various types of outer bulbs such as sealed-beam type bulbs, reflector concave type bulbs (not shown) instead of the eggplant-shaped outer bulb 2 to form double-bulb type halogen lamps. Typically, a deposited metal layer or multi-layer film coating is formed on reflective portions of such bulbs. Where the multi-layer film coating is formed, visible light is reflected and infrared-red ray is emitted to the back of the coating.

With these constructions, the halogen lamp can be used as a light source and, hence can provide a brightness 30 to 40 % higher than that of a conventional eggplant-shaped incandescent bulb for general lighting (GLS) at an equal power consumption while at the same time enjoying a lifetime over twice as long as that of the conventional one. Further, since the double-ended type halogen lamp when used as a light source provides a pressure-resistant construction more easily than a single-ended type halogen lamp, the lamp of the invention is advantageous in general lighting.

### EXAMPLE

A large-diameter glass tube having an inside diameter of 6 mm, an outside diameter of 8 mm, an inside length of about 12 mm, and an outside length of about 14 mm is connected at its one end to a first small-diameter glass tube having an inside diameter of 3 mm, an outside diameter of 5 mm, and an inside length of about 50 mm, and a narrow portion having a width of 2 mm is formed adjacent the connecting portion. A second small-diameter glass tube having an inside diameter of 2 mm, an outside diameter of 4 mm, and a length of about 9 mm is connected to the other end of the large-diameter glass tube, thus providing a lamp envelop. A mount is formed including an engagement-side sealing foil having a width of 2.5 mm and a length of 5 mm, an insertion-side sealing foil having a width of 1.5 mm and a length of 5 mm, a filament having an outside diameter of 0.9 mm with a light emitting portion having a length of 8 mm, and outer lead pins, wherein the length of each welded portion between the filament and each sealing foil and between each outer lead pin and each sealing foil is 1mm. Sealing is carried out in the manner previously described to embed the sealing foils in the seal portions. Thus, the halogen lamp as shown in Figs. 17 or 18 is formed.

As has been described, the present invention eliminates a conventionally required tip tube and hence makes it possible to provide a lamp having a lamp envelop with minimized strain due to local heating and uneven material distribution, resulting in considerably reduced possibility of explosion. Further, by virtue of the construction free of the tip tube, scattering of light can also be avoided to ensure good distribution of light. Hence, the halogen lamp of the invention can be used not only in general lighting but also in precision optical systems, for example, as a light source of a microscope or a spotlight. Furthermore, the lamp envelop is less likely to be subjected to non-uniform temperature distribution, and uneven evaporation of the tungsten filament is reduced, resulting in the lamp enjoying prolonged lifetime.

Since the mount can be suspended in the lamp envelop by engaging the sealing foil or the engagement member with the narrow portion of the lamp envelop, it is possible to position the mount on the central axis of the lamp envelop, which facilitates automation of the sealing process for both the quartz glass type halogen lamp and the hard glass type halogen lamp.

There is a further advantage that the provision of the positioning portion at one end of the lamp envelop allows the mount to be well positioned at the opposite ends thereof and hence enables easy and accurate positioning or centering of the mount relative to the lamp envelop. This construction is particularly suitable for lamps of the type in which multi-layer film coating is applied to the surface of the lamp envelop to enhance the luminous efficiency.

Additionally, the halogen lamp of the invention can be suitably used in an outer bulb as a light, compact and inexpensive inner bulb.

While only certain presently preferred embodiments of the invention have been described in detail, as will be apparent with those familiar with the art, certain changes and modifications can be made in embodiments without departing from the spirit and scope of the invention as defined by the following claims.

## Claims

1. A double-ended type halogen lamp comprising:
a lamp envelop having seal portions at opposite ends thereof, and
a filament extending between the seal portions,
the seal portions each having a width smaller than the outside diameter of the lamp envelop,
the width of one of the seal portions being equal to or different from that of the other.

2. A double-ended type halogen iamp comprising:
a lamp envelop having seal portions at opposite ends thereof, and
a filament extending between the seal portions,
one of the seal portions having a width smaller than the outside diameter of the lamp envelop,
the other having a width substantially equal to or larger than the outside diameter of the lamp envelop.

3. A double-ended type halogen lamp comprising:
a lamp envelop having seal portions at opposite ends thereof,
sealing foils respectively embedded in the seal portions, and
a filament disposed in the lamp envelop and having opposite ends connected to the respective sealing foils,
one of the sealing foils having a width larger than any one of the width of the other sealing foil and the outside diameter of the filament.

4. A method of making a double-ended type halogen lamp comprising the steps of:
providing a lamp envelop having a narrow portion of a smaller inside width at at least one end thereof;
forming a mount having a first end intended to pass through the narrow portion and a second end not intended to pass through the narrow portion, the mount including: a filament capable of passing through the narrow portion, one end of the filament on the side of the second end of the mount being connected to a sealing foil having a larger width than the inside width of the narrow portion, the other end of the filament being connected to another sealing foil having a smaller width than the inside width of the narrow portion;
inserting the mount into the lamp envelop from the first end thereof until the sealing foil having a larger width engages the narrow portion of the lamp envelop; and
sealing the opposite ends of the lamp envelop.

5. A method of making a double-ended type halogen lamp comprising the steps of:
providing a lamp envelop having a narrow portion of a smaller inside width at at least one end thereof;
forming a mount having a first end intended to pass through the narrow portion and a second end not intended to pass through the narrow portion, the mount including: a filament capable of passing through the narrow position, a first sealing foil having a width smaller than the inside width of the narrow portion and connected to one end of the filament on the side of the first end of the mount, a second sealing foil connected to the other end of the filament on the side of the second end of the mount, and an engagement member having a width larger than the inside width of the narrow portion and attached to one of the second sealing foil, the filament on the side of the second end of the mount and an outer lead pin connected to the second sealing foil on the side opposite the filament;
inserting the mount into the lamp envelop from the first end thereof until the engagement member engages the narrow portion; and
sealing the opposite ends of the lamp envelop.

6. A method of making a double-ended type halogen lamp comprising the steps of:
providing a lamp envelop having a narrow portion of a smaller inside width at at least one end thereof;
forming a mount having a first end intended to pass through the narrow portion and a second end not intended to pass through the narrow portion, the mount including: a filament capable of passing through the narrow portion, lead pins respectively connected to opposite ends of the filament, and an engagement member having a larger width than the inside width of the narrow portion and attached to one of the lead pins or to the filament;
inserting the mount into the lamp envelop from the first end thereof until the engagement member engages the narrow portion; and
sealing the opposite ends of the lamp envelop.

7. A method of making a double-ended type halogen lamp as set forth in claim 4, wherein the lamp envelop has a positioning portion with a small diameter at the end opposite the narrow portion, and the first end of the mount is inserted into the positioning portion.

8. A method of making a double-ended type halogen lamp as set forth in claim 5, wherein the lamp envelop has a positioning portion with a small diameter at the end opposite the narrow portion, and the first end of the mount is inserted into the positioning portion.

9. A method of making a double-ended type halogen lamp as set forth in claim 6, wherein the lamp envelop has a positioning portion with a small diameter at the end opposite the narrow portion, and the first end of the mount is inserted into the positioning portion.
